# EUROPEAN PATENT SPECIFICATION

(11) **EP 1 721 811 B1**
(45) Date of publication and mention of the grant of the patent: **28.01.2009**
(21) Application number: 06252495.4
(22) Date of filing: 12.05.2006
(51) Int. Cl.: B62D 25/16

(54) **Structure for fixing wheel arch molding**
Befestigungsstruktur für Radhaus-Formkörper
Dispositif de fixation pour revêtement d'aile

(30) Priority: 13.05.2005 JP 2005140544
(43) Date of publication of application: 15.11.2006
(73) Proprietor: Honda Motor Co., Ltd., Tokyo 107-8556 (JP)
(72) Inventor: Momii, Motoyuki, Wako-Shi Saitama 351-0193 (JP)
(74) Representative: Piésold, Alexander James

(56) References cited:
- JP-A- 8 230 715
- JP-A- 61 057 471
- JP-A- 2000 103 364
- US-B1- 6 205 642

## Description

### BACKGROUND OF THE INVENTION

### Field of the Invention

The present invention relates to a structure for fixing a wheel arch molding in which the wheel arch molding is fixed to an arc-shaped wheel arch formed at a bumper.

### Description of the Related Art

Japanese Patent Application Laid-open No. 2000-103364 discloses a structure in which a wheel arch molding 5 to be mounted to a wheel arch (attachment surface 9) of a bumper side 3 is formed to be L-shaped in section, a protruding claw 16 provided on a back surface of a decorative face of the wheel arch molding 5, which faces outward from a vehicle body, is engaged in a mounting hole 25 provided in the attachment surface 9 of the bumper side 3, and a flange (abutment surface 13) which extends to an inside of the vehicle body from the decorative face is fixed to a mounting surface 12 of the bumper side 3 with a clip 15.

In the structure described in Japanese Patent Application Laid-open No. 2000-103364, the flange (abutment surface 13) which extends to the inside of the vehicle body from the decorative face of the wheel arch molding 5 is fixed to the mounting surface 12 of the bumper side 3 with the clip 15, and therefore has a problem that the width in a vehicle width direction of the flange becomes large in order to secure the attachment space for the clip 15, and the tread of a wheel is correspondingly limited to be small.

Document JP 61 057 471 A discloses the preamble of claim 1.

### SUMMARY OF THE INVENTION

The present invention has been achieved in view of the above circumstances, and has an object to fix a wheel arch molding to a wheel arch beautifully so that a gap is not generated between the wheel archmolding and the wheel arch while decreasing a dimension in the vehicle width direction of the wheel arch molding that is fixed to the wheel arch of the bumper.

According to the present invention, there is provided a structure for fixing a wheel arch molding, in which a wheel arch molding is fixed to an arc-shaped wheel arch formed at a bumper, whereby a radially outer edge of the wheel arch molding is caused to abut on a step portion formed at a radially outer edge of the wheel arch, and a clip provided on a back surface of the wheel arch molding at an intermediate portion in a band width direction is engaged with the wheel arch, characterized in that a protruding portion is formed at a radially inner edge of the wheel arch which presses the back surface of the wheel arch molding.

The rear bumper 11 in an embodiment corresponds to the bumper of the present invention.

With the arrangement of the present invention, when the radially outer edge of the wheel arch molding is caused to abut on the step portion formed at the radially outer edge of the wheel arch, and the clip provided on the back surface of the wheel arch molding at an intermediate portion in the band width direction is engaged with the wheel arch, the protruding portion formed at the radially inner edge of the wheel arch presses the back surface of the wheel arch molding. Therefore, the protruding portion of the wheel arch becomes a fulcrum and the clips become a power point, whereby the radially outer edge of the wheel arch molding serving as a point of application closely contacts the step portion of the wheel arch to improve the appearance. In addition, in order to fix the wheel arch molding to the bumper, a flange which protrudes inward in the vehicle width direction does not need to be formed at the radially inner edge of the wheel arch molding, and therefore the dimension in the vehicle width direction of the wheel arch molding is made small to be able to secure the tread of a wheel.

The above-mentioned object, other objects, characteristics and advantages of the present invention will become apparent from a preferred embodiment, which will be described in detail below by way of example only and with reference to the attached drawings, in which :
FIG. 1 is a perspective view of a left half part of a rear bumper;
FIG. 2 is a view seen in the direction of an arrow 2 in FIG. 1;
FIG. 3 is an exploded perspective view corresponding to FIG. 2;
FIG. 4 is a view seen in the direction of an arrow 4 in FIG. 1;
FIG. 5 is a view seen in the direction of an arrow 5 in FIG. 1;
FIG. 6 is an enlarged sectional view taken on a line 6-6 in FIG. 3;
FIG. 7 is an enlarged sectional view taken on a line 7-7 in FIG. 3;
FIG. 8 is an enlarged sectional view taken on a line 8-8 in FIG. 3;
FIG. 9 is an enlarged sectional view taken on a line 9-9 in FIG. 3;
FIG. 10 is an enlarged sectional view taken on a line 10-10 in FIG. 4;
FIGS. 11A to 11D are enlarged sectional views of the respective parts in FIG. 5;
FIG. 12 is an explanatory view of an operation at the time of coating a bolt hole cap;
FIG. 13 is an enlarged sectional view taken on a line 13-13 in FIG. 4;
FIG. 14 is a sectional view taken on a line 14-14 in FIG. 13; and FIG. 15 is an exploded perspective view of a periphery of an exhaust finisher.

### DESCRIPTION OF THE PREFERRED EMBODIMENT

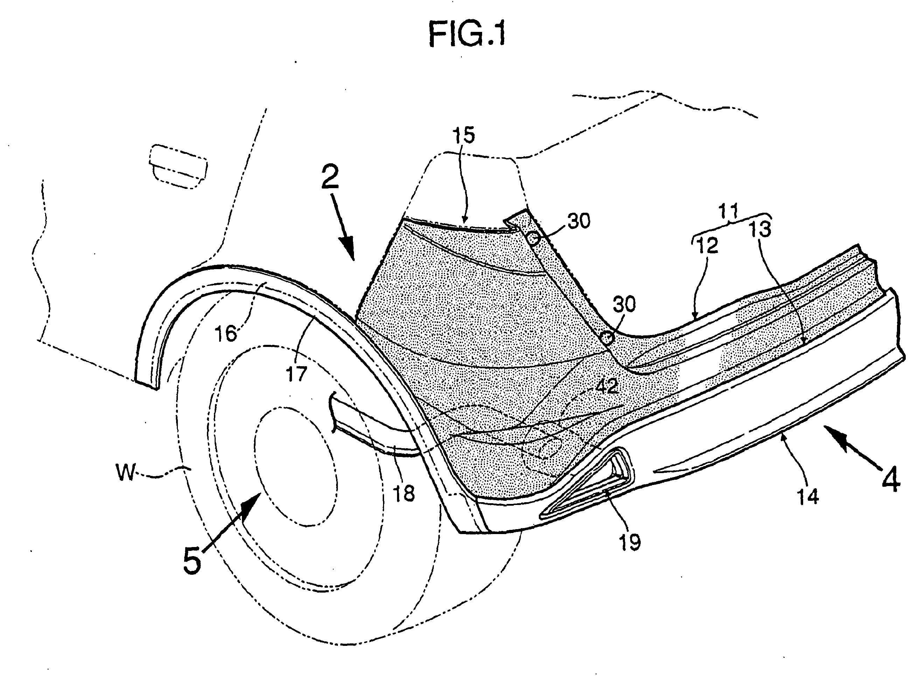

As shown in FIG. 1, a rear bumper 11 of an automobile is constructed by a coated upper bumper 12 and an uncoated lower bumper 13. The rear bumper 11 includes a main body part 14 which extends in a lateral direction along a vehicle body rear surface, and a pair of side parts 15 (only the left side part is shown in FIG. 1) which extend to the vehicle body front side from left and right opposite ends of the main body part 14. A rear portion of a wheel arch molding 17 which covers a wheel arch 16 of a rear wheel W is connected to the side part 15 of the rear bumper 11. An exhaust finisher 19 which decorates an outlet of an exhaust pipe 18 is provided at a position near a left end of the lower bumper 13.

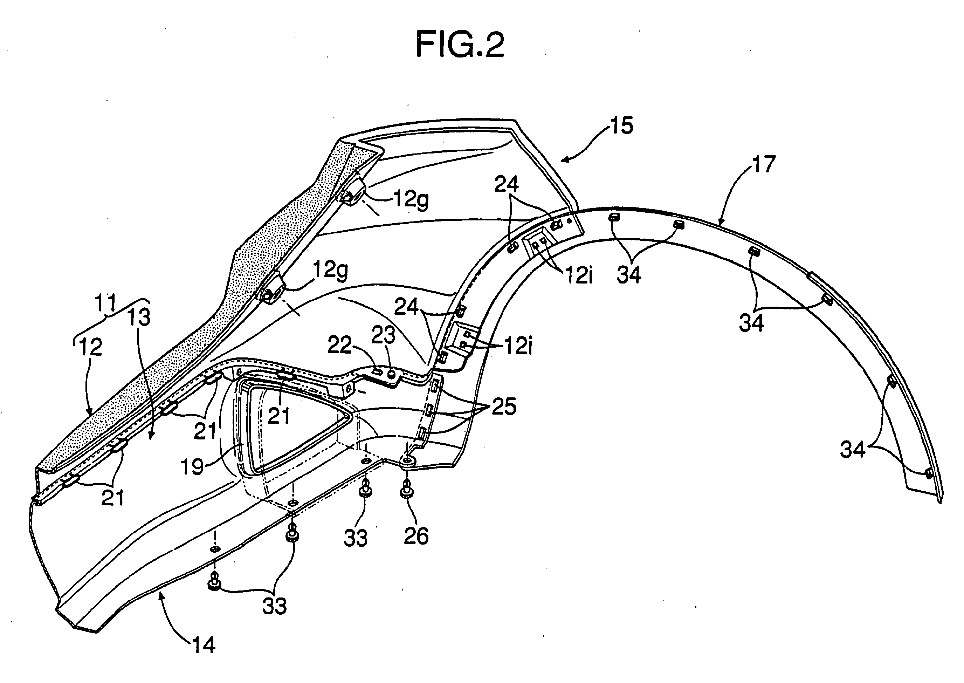

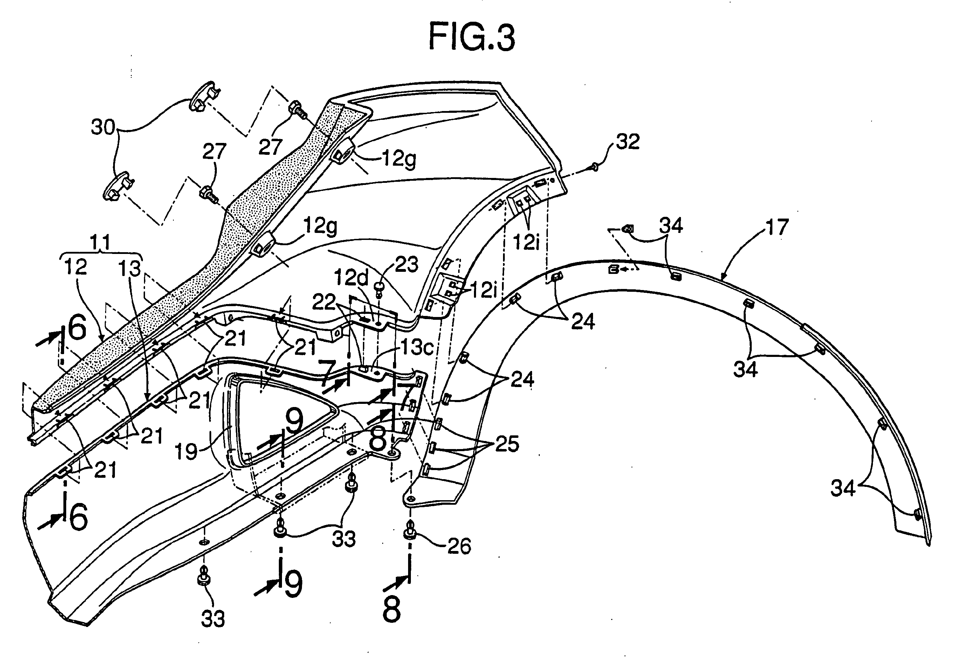

As shown in FIGS. 2 and 3, in the main body part 14 of the rear bumper 11, the upper bumper 12 and the lower bumper 13 are connected with a plurality of recess-protrusion engaging portions 21 disposed at predetermined intervals, and in the side part 15 of the rear bumper 11, the upper bumper 12 and the lower bumper 13 are positioned with a recess-protrusion engaging portion 22 at one spot and connected with one clip 23.

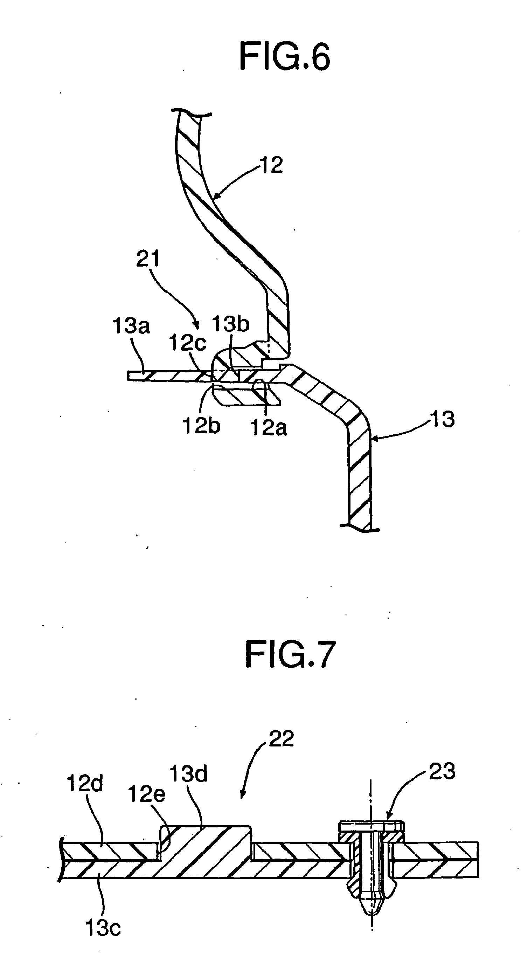

As is obvious from FIG. 6, the recess-protrusion engaging portion 21 which connects the upper bumper 12 and the lower bumper 13 in the main body part 14 of the rear bumper 11 is constructed by a locking claw 12c which protrudes downward from above into an opening 12b at an innermost side of a slit 12a which is formed in a lower edge of the upper bumper 12, and a locking hole 13b which is formed at a center of a rib 13a provided at an upper edge of the lower bumper 13 to protrude to the front side of the vehicle body. Accordingly, when the lower bumper 13 is moved to the front side of the vehicle body relatively to the upper bumper 12, and the rib 13a of the lower bumper 13 is inserted into the opening 12b of the slit 12a of the upper bumper 12, the locking claw 12c of the upper bumper 12 is elastically engaged in the locking hole 13b of the lower bumper 13 to achieve connection between the upper bumper 12 and the lower bumper 13 in the main body part 14 of the rear bumper 11.

As is obvious from FIGS. 2, 3 and 7, the recess-protrusion engaging portion 22 which connects the upper bumper 12 and the lower bumper 13 in the side part 15 of the rearbumper 11 is constructed by a rectangular locking hole 12e which is formed in a flange 12d (see FIG. 3) at a lower edge of the upper bumper 12, and a locking protrusion 13d rectangular in section which is provided to protrude upward in a flange 13c (see FIG. 3) at the upper edge of the lower bumper 13. The locking hole 12e and the locking protrusion 13d extend in a substantially longitudinal direction of the vehicle body.

Accordingly, when the lower bumper 13 is moved to the front side of the vehicle body relatively to the upper bumper 12 to connect the main body part 14, the upper bumper 12 and the lower bumper 13 can be positioned with each other by engaging the locking hole 12e and the locking protrusion 13d in the side part 15, and in this state, the upper bumper 12 and the lower bumper 13 are connected together by the clip 23. Since the locking hole 12e and the locking protrusion 13d extend in the longitudinal direction of the vehicle body, parallelism of the upper bumper 12 and the lower bumper 13 in the side part 15 is effectively secured to enhance the positioning accuracy. In addition, a large number of bolts and a large number of clips do not need to be used, thereby contributing to reduction in the number of components and the number of assembling steps.

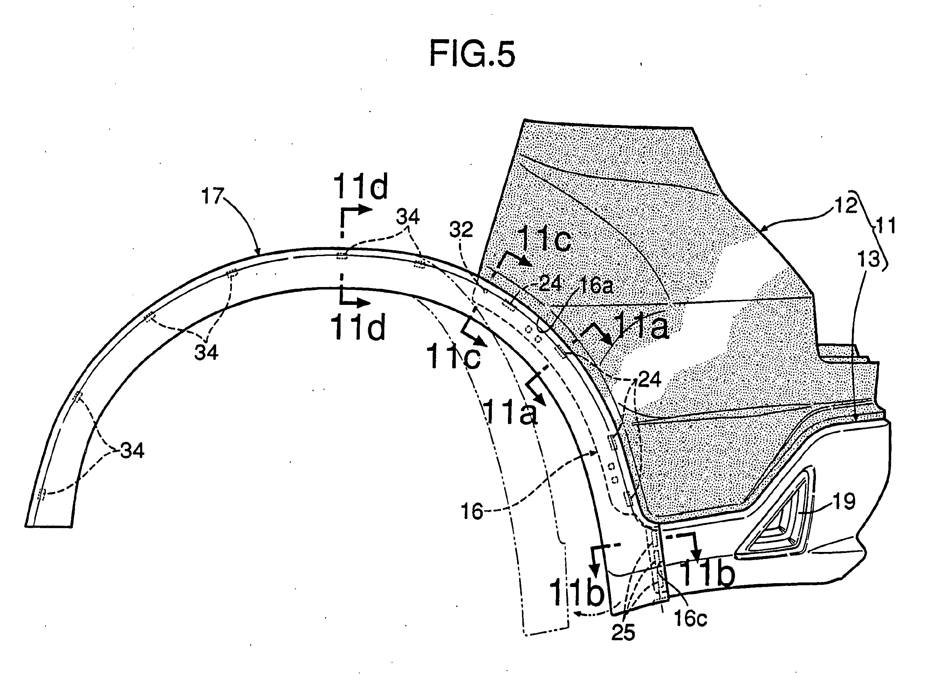

As shown in FIGS. 2, 3 and 5, the wheel arch molding 17 is connected at a position near the rear portion to the wheel arch 16 of the upper bumper 12 with four clips 24, and a rear portion of the wheel arch molding 17 is connected to the wheel arch 16 of the lower bumper 13 with three clips 25 and one clip 26.

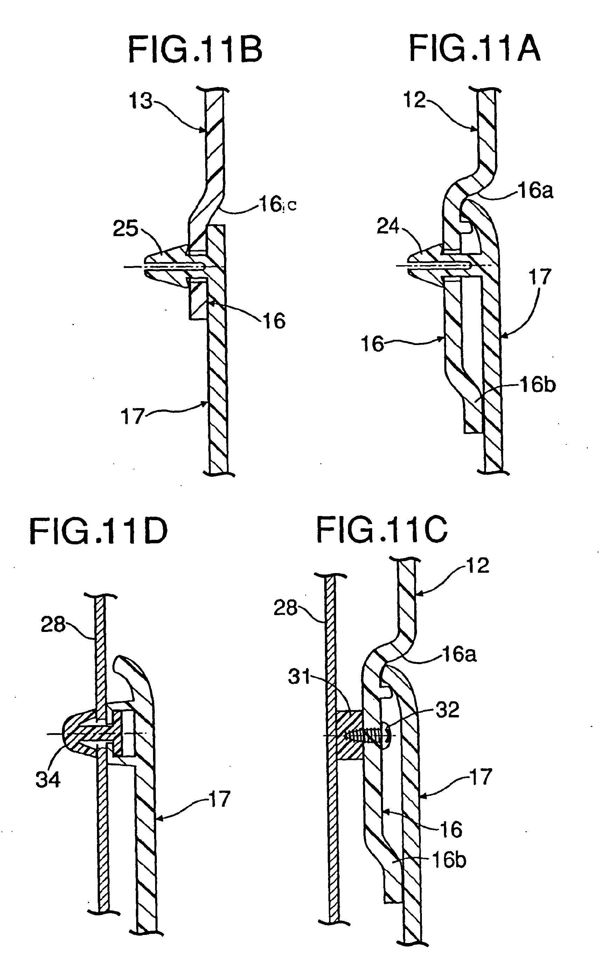

Namely, an arc-shaped step portion 16a which is recessed inside the vehicle body is formed in a portion of the wheel arch 16, which corresponds to the front edge of the upper bumper 12, and the four clips 24 projectingly provided on the back surface of the wheel arch molding 17 engage with the upper bumper 12 in a state in which a radially outer edge of the wheel arch molding 17 abuts on the step portion 16a (see FIG. 11A). At this time, a protruding portion 16b projectingly provided at a radially inner edge of the wheel arch 16 abuts on a back surface of the wheel arch molding 17 so as to press the back surface of the wheel arch molding 17 with a fixing load applied by the clips 24.

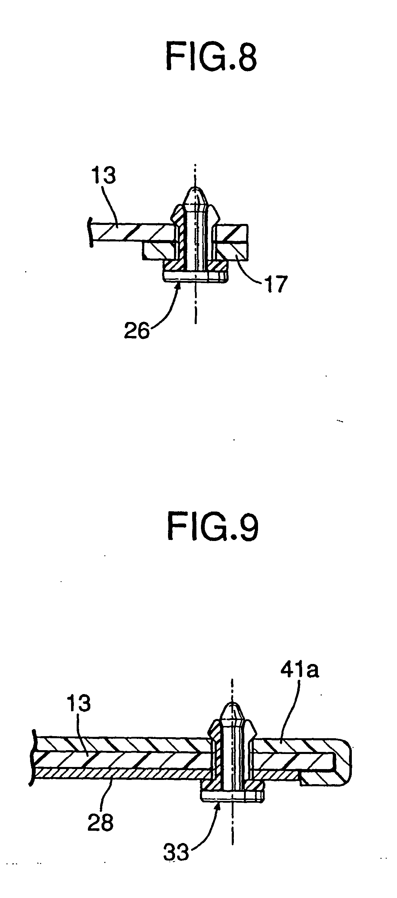

An arc-shaped step portion 16c which is recessed inside the vehicle body is formed at a portion of the wheel arch 16, which corresponds to the front edge of the lower bumper 13, and the three clips 25 projectingly provided on the inner surface of the wheel arch molding 17 engage with the lower bumper 13 in a state in which the radially outer edge of the wheel arch molding 17 abuts on the step portion 16c (see FIG. 11B). Further, a rear end of the wheel arch molding 17 is connected to the front edge of the lower bumper 13 with the one clip 26 which is inserted upward from below (see FIG. 8).

As shown in FIGS. 3, 4 and 10, the upper bumper 12 is fixed to the vehicle body 28 with respective two bolts 27 and 27 on the left and the right. A cup-shaped recessed portion 12g is formed in the upper bumper 12 in the vicinity of a fastening portion of each of the bolts 27, and the bolt 27 which penetrates through a bottom wall of the recessed portion 12g and the vehicle body 28 is screwed into a weld nut 29 and fastened. In order to conceal a head of the bolt 27, the recessed portion 12g of the upper bumper 12 is closed by a bolt hole cap 30. The bolt hole cap 30 is made of a synthetic resin which is the same as the material of the upper bumper 12, and two locking claws 30a and 30a projectingly provided on the back surface of the bolt hole cap 30 engage in two locking holes 12h and 12h formed in a side wall of the recessed portion 12g, whereby the bolt hole cap 30 is fixed to the upper bumper 12.

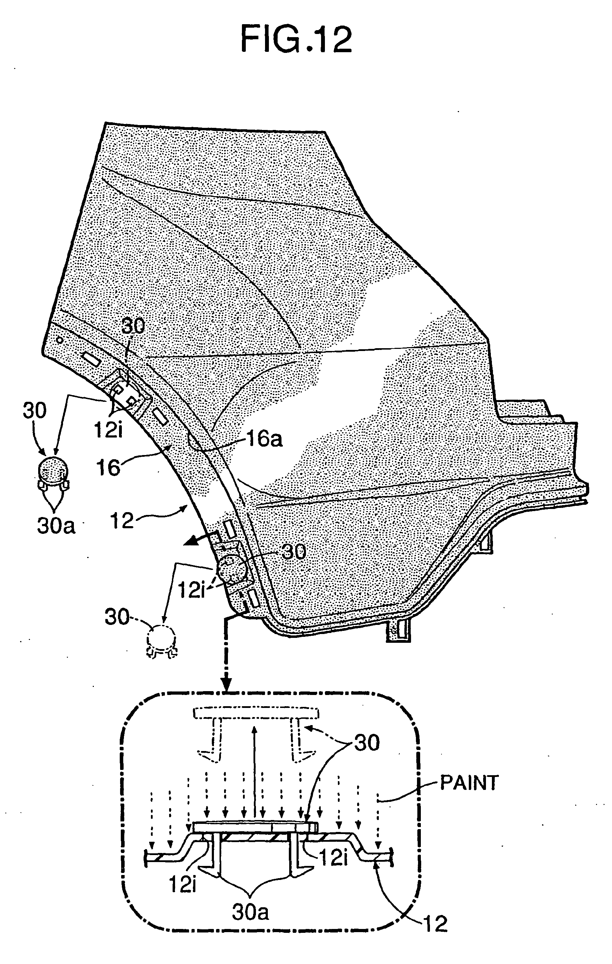

The upper bumper 12 is a coated component, and the bolt hole caps 30 and 30 are also coated in the same color as the upper bumper 12. If the upper bumper 12 and the bolt hole caps 30 and 30 are separately coated, there is a fear of slightly different colors of them degrading the quality, and therefore the bolt hole caps 30 and 30 are simultaneously coated when the upper bumper 12 is coated. For this purpose, two sets of temporary support holes 12i and 12i are formed in the wheel arch 16 of the upper bumper 12 which is covered with the wheel arch molding 17 as shown in FIG. 12, and the locking claws 30a and 30a of the bolt hole cap 30 are engaged in the temporary support holes 12i and 12i to temporarily support the bolt hole cap 30 at the upper bumper 12.

Accordingly, if coating is applied simultaneously in a state in which the bolt hole cap 30 is temporarily supported at the upper bumper 12 as shown in FIG. 12, the difference between the colors of the bolt hole cap 30 and the upper bumper 12 can be prevented, and the number of coating steps does not increase. If the bolt hole cap 30 is removed from the upper bumper 12 after the coating, the portion where the bolt hole cap 30 is mounted to the wheel arch 16 of the upper bumper 12 has no coating, but such a portion is the portion concealed by the wheel arch molding 17, providing no problem.

As shown in FIGS. 3, 5 and 11C, the front end of the upper bumper 12 is fixed to a spacer 31 which is fixed to the vehicle body with a taping screw 32. The tapping screw 32 is covered with the wheel arch molding 17 to be invisible from outside.

As shown in FIGS. 2, 3 and 9, left and right opposite end portions of the lower edge of the lower bumper 13 are each connected to the vehicle body 28 with three clips 33 which are inserted upward from below. As shown in FIGS. 3 and 11D, in order to fix the wheel arch molding 17 to the wheel arch 16 of the vehicle body 28, six clips 34 supported on an inner surface of a front portion of the wheel arch molding 17 engage with the wheel arch 16.

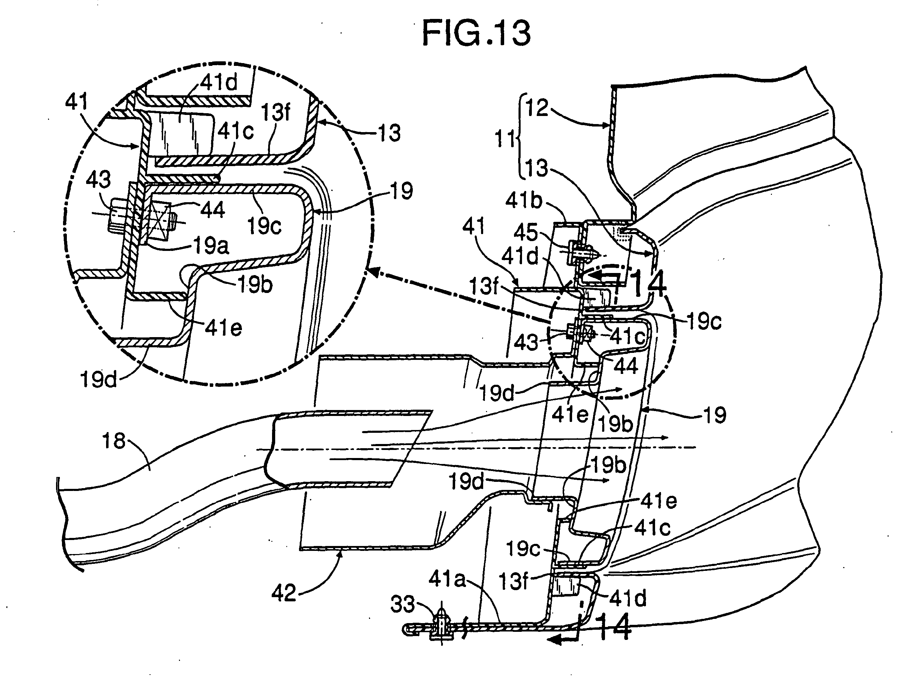

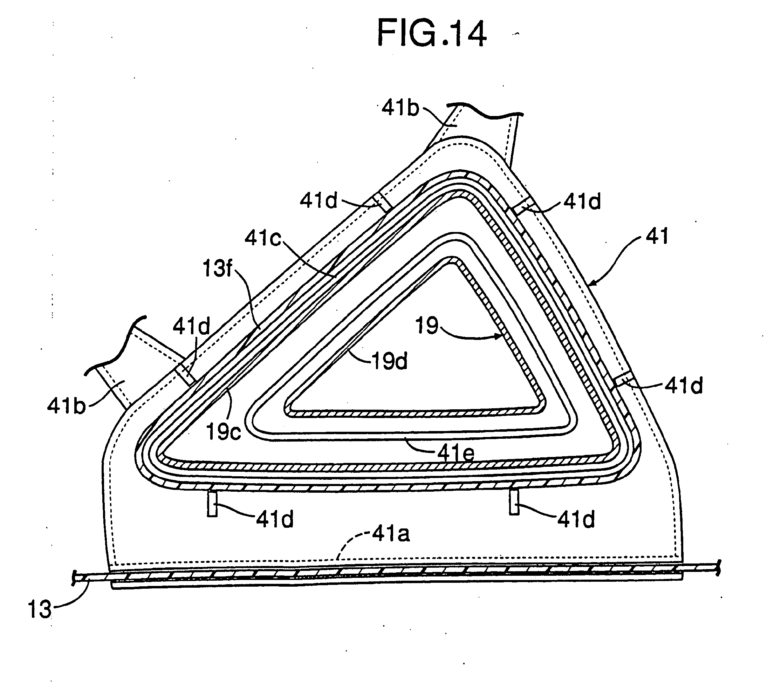

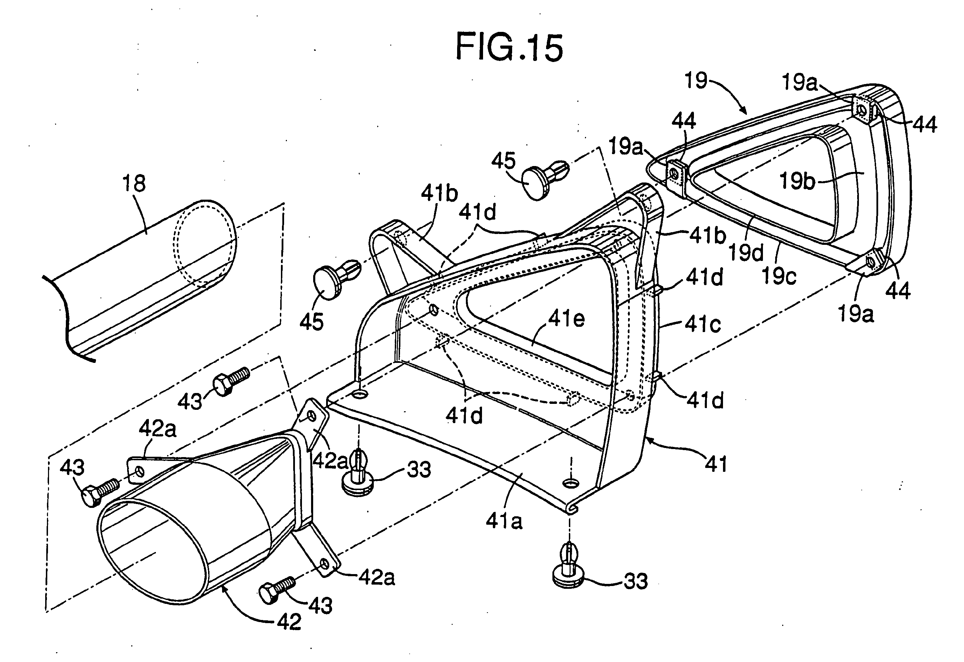

As shown in FIGS. 13 to 15, the metal exhaust finisher 19, a finisher holder 41 of a heat-resistant synthetic resin, and a metal exhaust guide member 42 are combined, and three bolts 43 which penetrate through three flanges 42a of the exhaust guide member 42, the finisher holder 41 and three mounting brackets 19a of the exhaust finisher 19 are screwed into weld nuts 44 which are provided on back surfaces of these mounting brackets 19a and fastened.

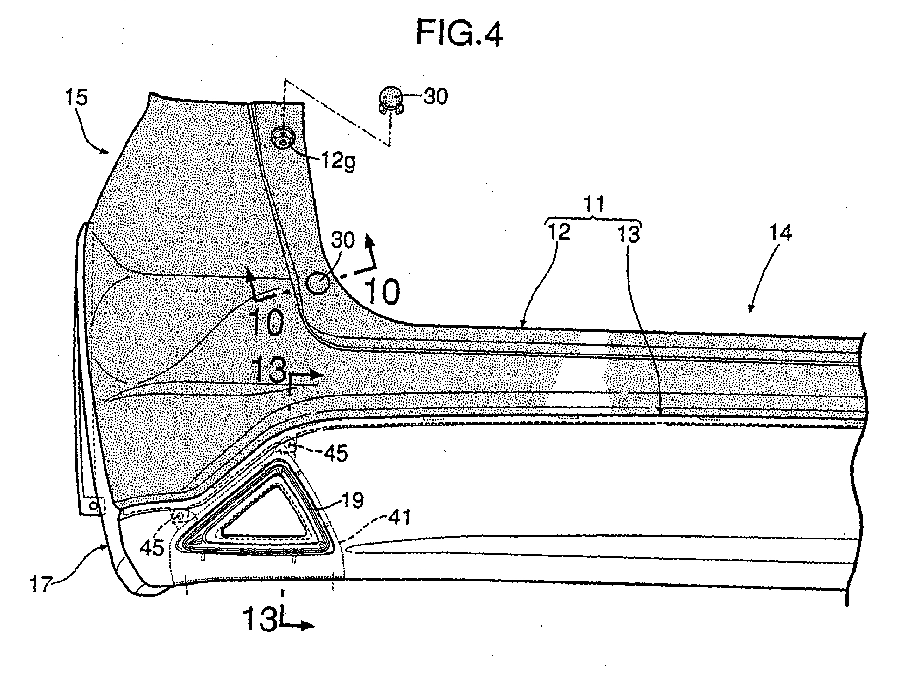

The exhaust guide member 42, the finisher holder 41 and the exhaust finisher 19 which are thus integrated with the three bolts 43 are fastened together to the lower bumper 13 and the vehicle body 28 with the two clips 33 and 33 which penetrate through a mounting bracket 41a provided on an undersurface of the finisher holder 41 (see FIGS. 3 and 9). Two mounting brackets 41b and 41b which are provided on an upper surface of the finisher holder 41 are fixed to the upper bumper 12 with two clips 45 and 45 (see FIG. 4). In this state, an outlet opening portion of the exhaust pipe 18 is loosely inserted into the exhaust guide member 42 (see FIG. 13), and the exhaust finisher 19 is exposed from a triangular open flange 13f of the lower bumper 13 to improve the appearance (see FIG. 4).

On a rear surface of the finisher holder 41, a triangular first positioning rib 41c, and six second positioning ribs 41d radially disposed with a predetermined gap along an outer periphery of the first positioning rib 41c are projectingly provided, and the open flange 13f of the lower bumper 13 is held between the first and second positioning ribs 41c and 41d with a gap therebetween. A triangular third positioning rib 41e which is provided at an inner periphery of the triangular first positioning rib 41c abuts on a step portion 19b on the front surface of the exhaust finisher 19 toposition the exhaust finisher 19 in the longitudinal direction. The exhaust finisher 19 has an outer peripheral flange 19c and an inner peripheral flange 19d which extend toward the front side of the vehicle body, and the outer peripheral flange 19c closely contacts an inner peripheral surface of the first positioning rib 41c of the finisher holder 41 to be positioned.

A gap between the open flange 13f of the rear bumper 11 and the outer peripheral flange 19c of the exhaust finisher 19 is kept constant by the first positioning rib 41c of the finisher holder 41, and therefore, the gap can be evenly kept over the entire periphery to improve the appearance. In addition, the heat of the metal exhaust finisher 19 which is at a high temperature due to contact with an exhaust gas can be shielded by the rib 41c of the finisher holder 41 made of the heat-resistant synthetic resin and the gap to make it difficult for the heat to reach the open flange 13f of the rear bumper 11.

Next, an assembly procedure of the rear bumper 11 will be described.

First, in order to integrally connect the upper bumper 12 and the lower bumper 13 in the main body part 14, the lower bumper 13 is brought close to the upper bumper 12 from behind, the ribs 13a provided at the upper edge of the lower bumper 13 are inserted into the slits 12a provided in the lower edge of the upper bumper 12, and the locking claws 12c of the upper bumper 12 are engaged in the locking holes 13b of the lower bumper 13 (see FIG. 6).

To integrally connect the upper bumper 12 and the lower bumper 13 in each of the side parts 15 simultaneously with the above procedure, the locking protrusion 13d provided on the upper surface of the flange 13c of the lower bumper 13 is engaged in the locking hole 12e provided in the flange 12d of the upper bumper 12, and the flange 13c of the lower bumper 13 and the flange 12d of the upper bumper 12 are connected together by the clip 23 (see FIG. 7).

Subsequently, the exhaust guide member 42, the finisher holder 41 and the exhaust finisher 19 which are integrated with the three bolts 43 are fixed to the lower bumper 13 with the two clips 33 and 33, and are fixed to the upper bumper 12 with the two clips 45 and 45 (see FIG. 13). By integrating the upper bumper 12 and the lower bumper 13 via the finisher holder 41 in this way, the rigidity of the rear bumper 11 can be enhanced.

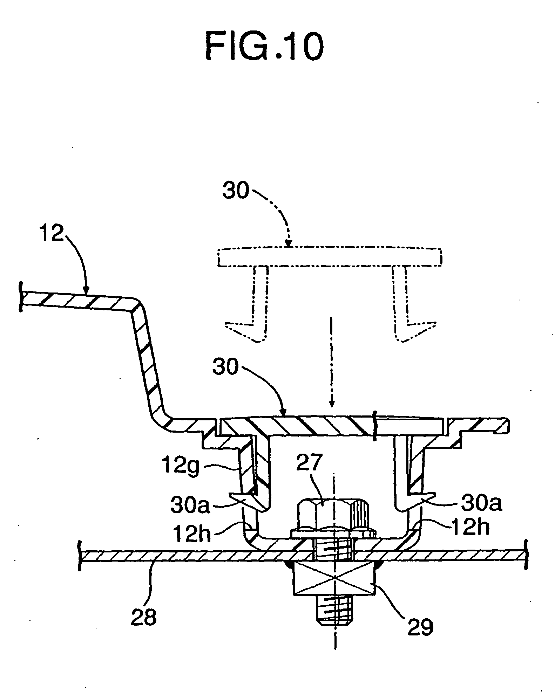

The rear bumper 11 which has been completely assembled has its lower bumper 13 fixed to the vehicle body 28 with the clips 33 (see FIG. 9), and has its upper bumper 12 fixed to the vehicle body 28 with the respective two bolts 27 and 27 on the left and the right (see FIG. 10).

When the rear bumper 11 is fixed to the vehicle body as described above, the wheel arch molding 17 is attached so as to cover the substantially semicircular wheel arch 16 which is defined by the vehicle body 28 and the rear bumper 11.

Namely, as shown in FIGS. 2, 3 and 5, the wheel arch molding 17 is connected at the position near the rear portion to the wheel arch 16 of the upper bumper 12 with the four clips 24, then the rear portion of the wheel arch molding 17 is connected to the wheel arch 16 of the lower bumper 13 with the three clips 25 and the one clip 26, and as shown in FIGS. 3 and 11D, the six clips 34 which are supported on the inner surface of the front portion of the wheel arch molding 17 are engaged with the vehicle body 28.

As is obvious from FIG. 11A, when the wheel arch molding 17 is connected to the wheel arch 16 of the upper bumper 12 with the clips 24, the protruding portion 16b projectingly provided at the radially inner edge of the wheel arch 16 becomes a fulcrum, the clips 24 become a power point, and the radially outer edge of the wheel arch molding 17, which is a point of application, is caused to closely contact the step portion 16a of the wheel arch 16. Therefore, a gap is prevented from generating between the wheel arch molding 17 and the wheel arch 16 to improve the appearance.

Since the wheel archmolding 17 is a substantiallyplate-shaped member and does not include a mounting flange which extends to the inside of the vehicle body, the dimension in the vehicle width direction of the wheel arch molding 17 can be decreased to avoid interference with the wheel, and a sufficient tread of the wheel can be secured.

The embodiment of the present invention has been described above, but the present invention is not limited to the above described embodiment, and various design changes can be made without departing from the subject matter of the present invention as defined by the appended claim.

For example, in the embodiment, the wheel arch molding 17 on the rear side is described, but the present invention is also applicable to the wheel arch molding 17 on the front side.

## Claims

1. A structure for fixing a wheel arch molding, in which a wheel arch molding (17) is fixed to an arc-shaped wheel arch (16) formed at a bumper (11),
whereby a radially outer edge of the wheel arch molding (17) is caused to abut on a step portion (16a) formed at a radially outer edge of the wheel arch (16), and a clip (24) provided on a back surface of the wheel arch molding (17) at an intermediate portion in a band width direction is engaged with the wheel arch (16), **characterised in that** a protruding portion (16b) is formed at a radially inner edge of the wheel arch (16) which presses the back surface of the wheel arch molding (17).

## Patentansprüche

1. Struktur zum Befestigen eines Radbogenformteils, wobei ein Radbogenformteil (17) an einem bogenförmigen Radbogen (16) befestigt ist, welcher an einem Stoßfänger (11) gebildet ist,
wobei bewirkt wird, dass ein radial äußerer Rand des Radbogenformteils (17) an einen Stufenabschnitt (16a) angrenzt, welcher an einem radial äußeren Rand des Radkastens (16) gebildet ist, und ein Klipp (24), welcher an einer Rückseite des Radbogenformteils (17) an einem Zwischenabschnitt in einer Bandbreitenrichtung bereitgestellt ist, mit dem Radbogen (16) in Eingriff steht, **dadurch gekennzeichnet, dass** ein vorstehender Abschnitt (16b) an einem radial inneren Rand des Radbogens (16) gebildet ist, welcher auf die Rückseite des Radbogenformteils (17) drückt.

## Revendications

1. Structure pour fixer une pièce moulée de passage de roue, dans laquelle une pièce moulée de passage de roue (17) est fixé à un passage de roue (16) en forme d'arc formé au niveau d'un pare-chocs (11),
dans laquelle un bord radialement externe de la pièce moulée de passage de roue (17) est amené en butée contre une portion surélevée (16a) formée au niveau d'un bord radialement externe du passage de roue (16), et une agrafe (24) prévue sur une surface arrière de la pièce moulée de passage de roue (17) au niveau d'une portion intermédiaire dans une direction de largeur de bande est encliquetée avec le passage de roue (16), **caractérisée en ce qu'**une portion saillante (16b) est formée au niveau d'un bord radialement interne du passage de roue (16) qui presse la surface arrière de la pièce moulée de passage de roue (17).
